# EUROPEAN PATENT APPLICATION

(11) **EP 4 653 846 A1**
(43) Date of publication of application: **26.11.2025**
(21) Application number: 25174907.3
(22) Date of filing: 07.05.2025
(51) Int. Cl.: G01N 21/359, B01F 35/213, B01F 35/22, G01N 21/84, G01N 21/65

(54) **DYNAMIC PROCESS END POINT DETERMINATION BASED ON A PROCESS PROFILE SHAPE**

(30) Priority: 22.05.2024 US 202418671486
(71) Applicant: Viavi Solutions Inc., Chandler, AZ 85286 (US)
(72) Inventor: SUN, Lan, Santa Rosa, CA 95404 (US); HSIUNG, ChangMeng, Redwood City, CA 94065 (US)
(74) Representative: Murgitroyd & Company

(57) **Abstract**

Method and device for dynamic process, such as a blending process, end point determination based on a process profile shape. The method comprises receiving, by a device (220), such as (a) spectrometer(s) 210, spectroscopic data (102) associated with an iteration of a dynamic process; generating (104), by the device (220) and based on the spectroscopic data, a process profile associated with the iteration of the dynamic process; generating (106), by the device (220) and based on the process profile, a slope profile associated with the iteration of the dynamic process; determining (108), by the device (220), a trend of the process profile; and identifying (110), by the device (220), a set of slope thresholds associated with the iteration of the dynamic process based on the trend. The detection device (220) may determine (112), using the set of slope thresholds, an end point of the iteration of the dynamic process based on the slope profile.

## Description

### BACKGROUND

A dynamic process, such as a blending process (e.g., a blending process associated with manufacturing a pharmaceutical product), may involve one or more transitions in state, such as a transition from an unsteady state (e.g., a heterogenous state of a blending at which properties of a blend vary with time) to a steady state (e.g., a homogeneous state of blending at which the properties of the blend remain substantially constant with time). For example, a blending process may involve a transition where spectral properties of a blend transition from an unsteady state (e.g., at a start of the blending process) to a steady state (e.g., indicating that the blending process is complete).

### SUMMARY

Some implementations described herein relate to a method. The method may include receiving, by a device, spectroscopic data associated with an iteration of a dynamic process. The method may include generating, by the device and based on the spectroscopic data, a process profile associated with the iteration of the dynamic process. The method may include generating, by the device and based on the process profile, a slope profile associated with the iteration of the dynamic process. The method may include determining, by the device, a trend of the process profile. The method may include identifying, by the device, a set of slope thresholds associated with the iteration of the dynamic process based on the trend.

The method may further comprise determining, using the set of slope thresholds, an end point of the iteration of the dynamic process based on the slope profile.

The end point may be determined further based on a set of end point criteria.

The set of slope thresholds may comprise a lower slope threshold and an upper slope threshold, and the set of end point criteria require a particular percentage of a quantity of consecutive values of the slope profile to be within the lower slope threshold and the upper slope threshold.

The trend may indicate that the process profile trends upward, and determining the set of slope thresholds may comprise: determining the set of slope thresholds based on a minimum value of the slope profile.

The trend may indicate that the process profile trends downward, and determining the set of slope thresholds may comprise: determining the set of slope thresholds based on a maximum value of the slope profile.

The method may further comprise performing normalization of the process profile prior to generating the slope profile.

The method may further comprise identifying, based on the spectroscopic data, a starting time point of the spectroscopic data to be used for determining an end point of the iteration of the dynamic process, wherein a starting time point associated with generating the slope profile may be at or after the identified starting time point of the spectroscopic data.

The iteration of the dynamic process may be a first iteration of the dynamic process, the set of slope thresholds may be a first set of slope thresholds, and the method may further comprise: identifying a second set of slope thresholds associated with a second iteration of the dynamic process; and identifying a master set of slope thresholds based on the first set of slope thresholds and the second set of slope thresholds.

The method may further comprise determining, using the master set of slope thresholds, an end point of at least one of the first iteration of the dynamic process or the second iteration of the dynamic process.

Some implementations described herein relate to a device. The device may include one or more memories and one or more processors coupled to the one or more memories. The one or more processors may be configured to obtain time-series spectroscopic data associated with an iteration of a dynamic process. The one or more processors may be configured to generate, based on the time-series spectroscopic data, a process profile associated with the iteration of the dynamic process. The one or more processors may be configured to generate, based on the process profile, a slope profile associated with the iteration of the dynamic process. The one or more processors may be configured to compute a set of slope thresholds associated with the iteration of the dynamic process based on the slope profile and a trend characteristic of the process profile.

The one or more processors may further be configured to determine, using the set of slope thresholds, an end point of the iteration of the dynamic process based on the slope profile.

The end point may be determined further based on a set of end point criteria.

The trend characteristic may indicate that the process profile trends upward, and determining the set of slope thresholds may comprise: determine the set of slope thresholds based on a minimum value of the slope profile.

The trend characteristic may indicate that the process profile trends downward, and the one or more processors, to determine the set of slope thresholds, may be configured to: determine the set of slope thresholds based on a maximum value of the slope profile.

The one or more processors may further be configured to perform normalization of the process profile prior to generating the slope profile.

The one or more processors may further be configured to identify, based on the time-series spectroscopic data, a starting time point of the spectroscopic data to be used for determining an end point of the iteration of the dynamic process, wherein a starting time point associated with generating the slope profile may be at or after the identified starting time point of the spectroscopic data.

The iteration of the dynamic process may be a first iteration of the dynamic process, the set of slope thresholds may be a first set of slope thresholds, and the one or more processors may further be configured to: identify a second set of slope thresholds associated with a second iteration of the dynamic process; and identify a master set of slope thresholds for the dynamic process based on the first set of slope thresholds and the second set of slope thresholds.

The one or more processors may further be configured to determine, using the master set of slope thresholds, an end point of a third iteration of the dynamic process.

Some implementations described herein relate to a non-transitory computer-readable medium that stores a set of instructions. The set of instructions, when executed by one or more processors of a device, may cause the device to obtain a process profile associated with an iteration of a dynamic process based on spectroscopic data associated with the iteration of the dynamic process. The set of instructions, when executed by one or more processors of the device, may cause the device to generate a slope profile associated with the iteration of the dynamic process based on the process profile. The set of instructions, when executed by one or more processors of the device, may cause the device to identify a set of slope thresholds associated with the iteration of the dynamic process based on the slope profile and a trend associated with the process profile. The set of instructions, when executed by one or more processors of the device, may cause the device to determine an end point of another iteration of the dynamic process based on the set of slope thresholds.

### BRIEF DESCRIPTION OF THE DRAWINGS

Figs. 1A-1J are diagrams associated with determining an end point of an iteration of a dynamic process based on a process profile shape, as described herein.
Fig. 2 is a diagram of an example environment in which systems and/or methods described herein may be implemented.
Fig. 3 is a diagram of example components of a device, which may correspond to spectrometer, detection device, and/or user device.
Fig. 4 is a flowchart of an example process associated with determining an end point of an iteration of a dynamic process based on a process profile shape.

### DETAILED DESCRIPTION

The following detailed description of example implementations refers to the accompanying drawings. The same reference numbers in different drawings may identify the same or similar elements. The following description uses a spectrometer as an example. However, the techniques, principles, procedures, and methods described herein may be used with any sensor, including but not limited to other optical sensors and spectral sensors.

As noted above, a dynamic process may involve a transition where spectral properties of a test subject transition from an unsteady state to a steady state. For example, a blending process may involve a transition where spectral properties of a blend of materials transition from an unsteady state (e.g., a state at which properties of the blend of materials vary with time) to a steady state (e.g., a state at which the properties of the blend of materials remain substantially constant with time). The steady state indicates that blending has been achieved. Therefore, accurate and reliable detection of the steady state based on spectral properties of the test subject can both improve performance of the dynamic process (e.g., by ensuring adequate blending) and increase efficiency of the dynamic process (e.g., by enabling a blending process to be ended as soon as blending has been achieved).

One conventional technique for detecting an end point of an iteration of a blending process based on spectral properties is to use a moving block analysis, which may include the use of, for example, a moving block standard deviation (MBSD), a moving block mean (MBM), a moving block relative standard deviation (MB-RSD), or a moving F-test. A moving block analysis typically requires selection of thresholds for such variables (e.g., the MBSD and/or the MBM), based on calibration or historical data, to determine when a steady state is reached. However, in practice, reproducing identical iterations of a dynamic process is difficult to achieve, particularly during development of a blending process. This means that selection of appropriate thresholds to be used for end point detection is challenging, which can result in inaccurate end point detection.

One alternative technique for determining an end point of an iteration of a dynamic process is visual examination of a shape of blending profiles (e.g., profiles generated based on spectral data) by an observer. Here, when a blending profile reaches a plateau, the blending process may be in a steady state. However, visual examination is subjective and is therefore not reliable. This is particularly true for blending profiles with slow-changing slopes - as different observers may reach different conclusions with respect to whether an iteration has reached an end point (i.e., whether the blending profile has plateaued). Furthermore, such manual determination of endpoints during production is not practical when many (e.g., hundreds) of iterations of the dynamic process need to be performed.

Some implementations described herein enable determination of an end point of an iteration of a dynamic process based on a process profile shape. That is, the techniques and apparatuses described herein enable determination of an end point of an iteration of a dynamic process (e.g., a blending process) based on a slope of a process profile (e.g., a blending profile). In some implementations, a device may receive spectroscopic data associated with an iteration of a dynamic process. The device may generate, based on the spectroscopic data, a process profile associated with the iteration of the dynamic process. The device may generate, based on the process profile, a slope profile associated with the iteration of the dynamic process. The device may determine a trend of the process profile, and identify a set of slope thresholds associated with the iteration of the dynamic process based on the trend. The device may then determine an end point of the iteration of the dynamic process based on the slope profile and using the set of slope thresholds.

In some implementations, the techniques and apparatuses described herein enable determination of an end point of an iteration of a dynamic process without a need for calibration or historical data and, furthermore, remove subjectivity from end point detection by both eliminating a need for manual selection of a threshold and eliminating a need for visual inspection of a blending profile. As a result, reliability of end point detection is increased. Notably, while examples described herein are described in the context of a blending process, these techniques and apparatuses can be used for any dynamic process that proceeds from an unsteady state toward a steady state. Additional details are described below.

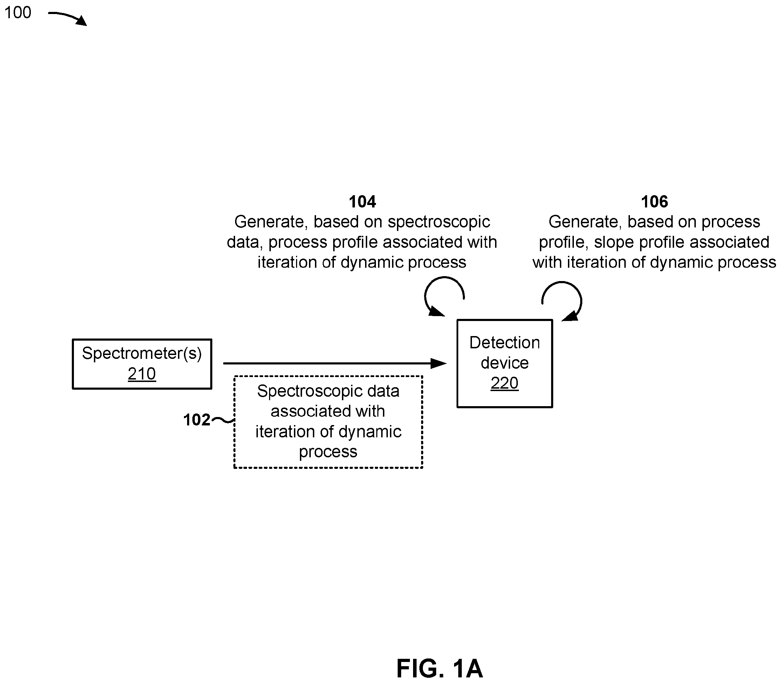

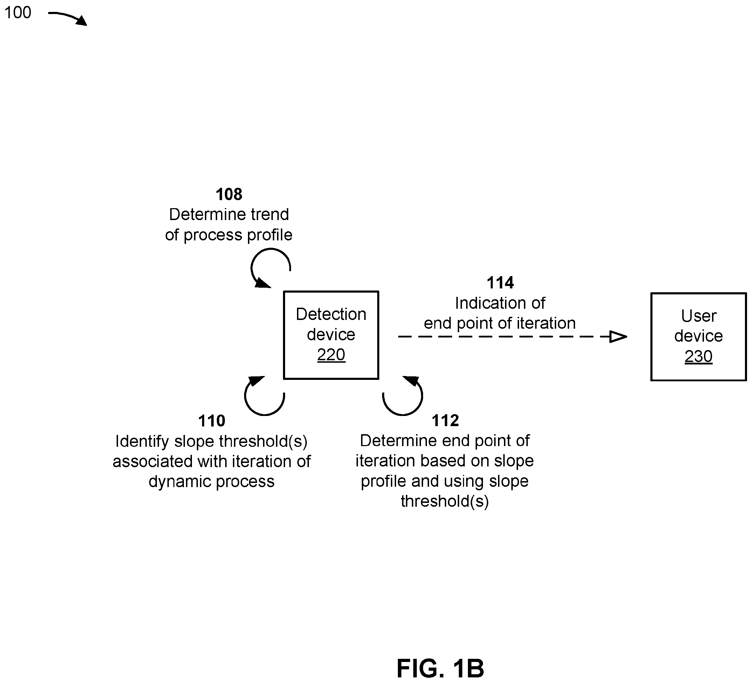

Figs. 1A-1J are diagrams associated with determining an end point of an iteration of a dynamic process based on a process profile shape, as described herein. Figs. 1A and 1B are diagrams illustrating an example implementation 100 associated with determining an end point of an iteration of a dynamic process based on a process profile shape. As shown in Figs. 1A and 1B, the example implementation 100 includes a spectrometer 210, a detection device 220, and a user device 230.

As shown in Fig. 1A at reference 102, the detection device 220 may receive spectroscopic data associated with an iteration of a dynamic process. For example, as shown, the spectrometer 210 may measure spectroscopic data at a given time during the iteration of the blending process, and may provide the spectroscopic data to the detection device 220. In some implementations, the spectroscopic data includes spectra (e.g., multivariate time series data, such as NIR spectra) measured by the spectrometer 210 during the iteration of the blending process.

In some implementations, the detection device 220 may receive the spectroscopic data in real-time or near real-time during the iteration of the blending process. For example, detection device 220 may receive spectroscopic data, measured by the spectrometer 210 during the iteration of the blending process, in real-time or near real-time relative to the spectrometer 210 obtaining the spectroscopic data during the blending process. In some implementations, the detection device 220 may, based on the spectroscopic data, determine an end point of the iteration of the dynamic process, as described herein.

In some implementations, the detection device 220 may preprocess the spectroscopic data. For example, the raw spectroscopic data may include some amount of noise, a scattering effect, an artifact, or other type of unwanted feature. Therefore, in some implementations, the detection device 220 may preprocess the spectroscopic data to reduce a presence of or remove such unwanted features from the spectroscopic data. In some implementations, the detection device 220 may preprocess the spectroscopic data using, for example, a derivative calculation technique, a standard normal variate (SNV) technique, or a multiplicative scatter correction (MSC) technique, among other examples.

As shown at reference 104, the detection device 220 may generate, based on the spectroscopic data, a process profile associated with the iteration of the dynamic process. In some implementations, the process profile may be generated using a moving block analysis, which may include computation of MBSD over a time period of the iteration of the dynamic process, MBM over the time period of the iteration of the dynamic process, or MB-RSD over a time period of the iteration of the dynamic process, among other examples.

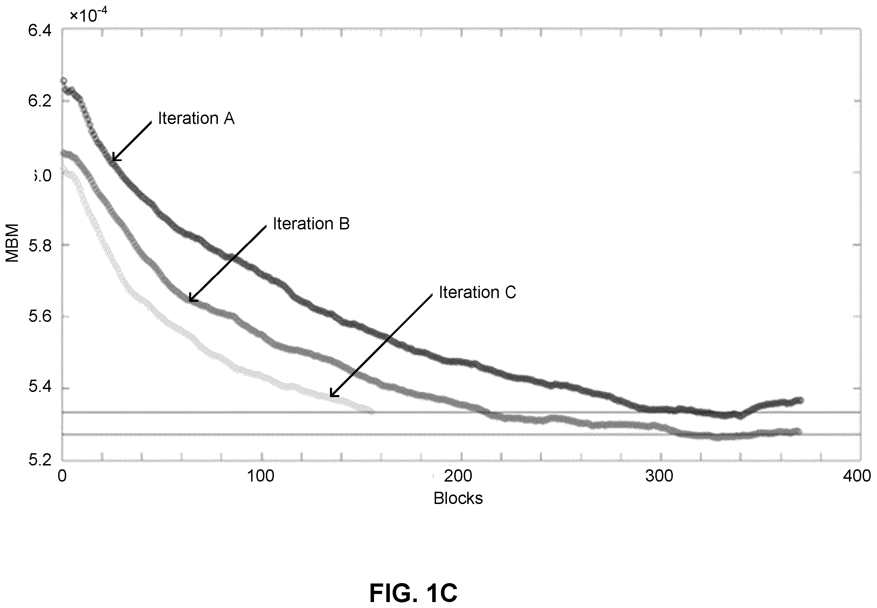

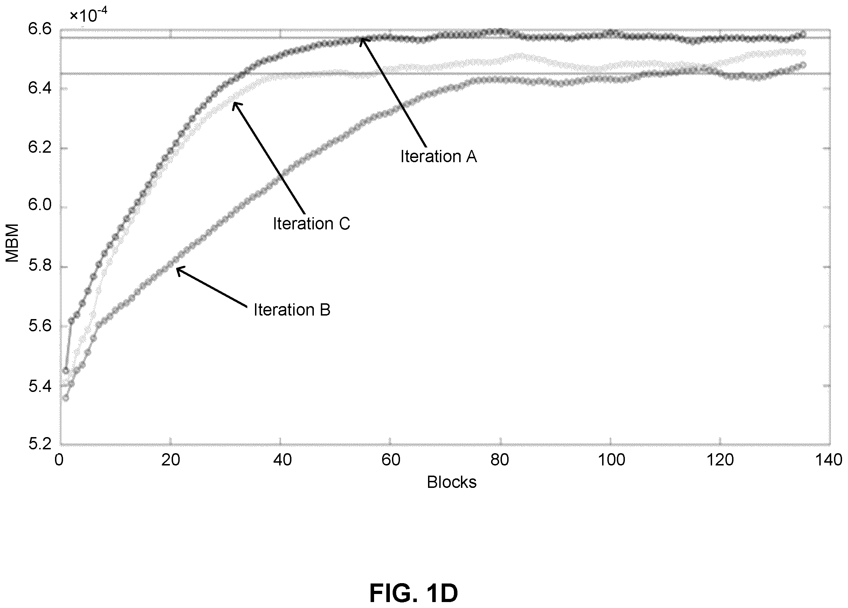

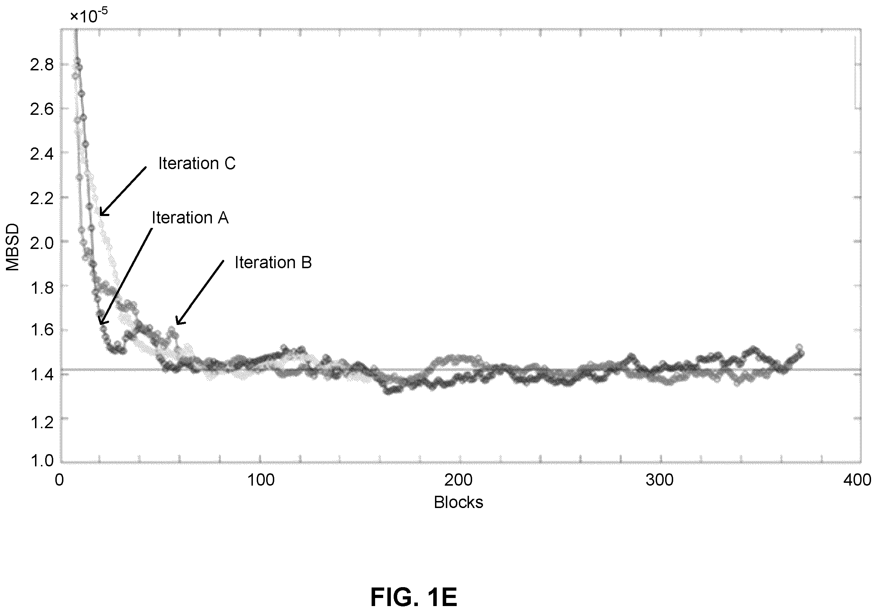

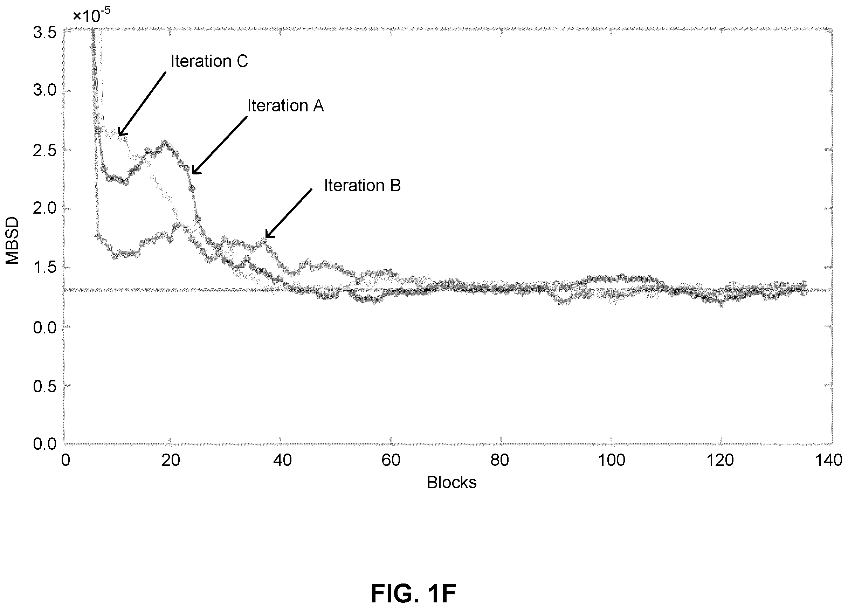

Figs. 1C-1F are diagrams illustrating examples of process profiles associated with three of iterations of a dynamic process. Figs. 1C and 1D are diagrams of MBM profiles for a first stage of blending and a second stage of blending, respectively, for each of the three iterations (e.g., Iteration A, Iteration B, and Iteration C) of the dynamic process. Figs. 1E and 1F are diagrams of MBSD profiles for the first stage of blending and the second stage of blending, respectively, for each of the three iterations of the dynamic process. Notably, for the MBM profiles shown in Figs. 1C and 1D, selecting upper and lower MBM limits to serve as end point detection thresholds for all three iterations of the dynamic process is not straightforward from visual inspection of the process profiles due to the inconsistency in MBM values across the different iterations. Selection of an MBSD limit based on the MBSD profiles in Figs. 1E and 1F is similarly difficult.

Returning to Fig. 1A, as shown at reference 106, the detection device 220 may generate, based on the process profile, a slope profile associated with the iteration of the dynamic process. The slope profile is a profile representative of the slope of the process profile over a duration of the iteration of the dynamic process. In some implementations, to generate the slope profile, the detection device 220 computes the slope of the process profile along an entire length (e.g., in the time domain) of the process profile by fitting a low order polynomial regression model in a sliding window, and then differentiating the regression model.

In some implementations, the detection device 220 may perform normalization of the process profile prior to generating the slope profile. In some implementations, normalization of process profiles (i.e., process profiles from different iterations with different value ranges) makes the process profiles more directly comparable. The normalization technique used by the detection device 220 to normalize the process profile may be, for example, normalization by range, or may be another type of normalization technique.

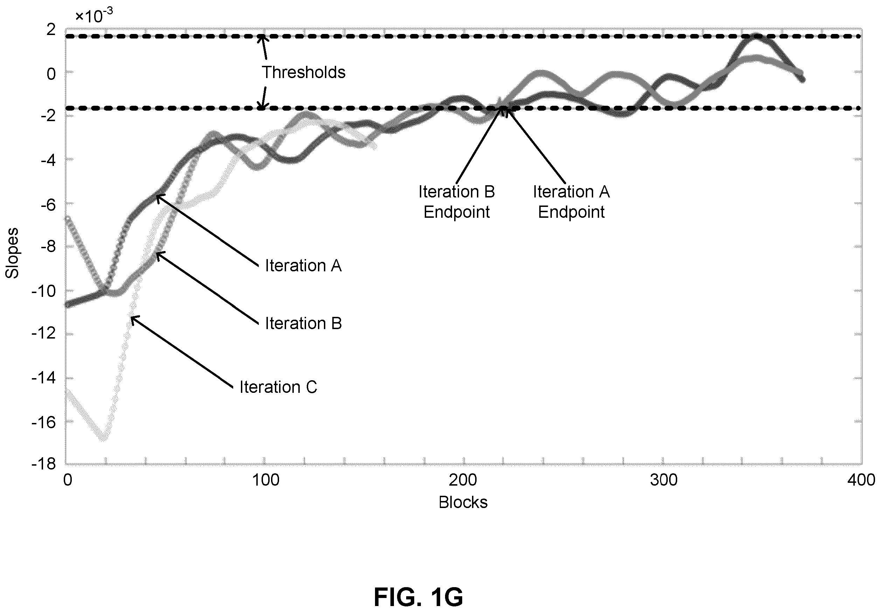

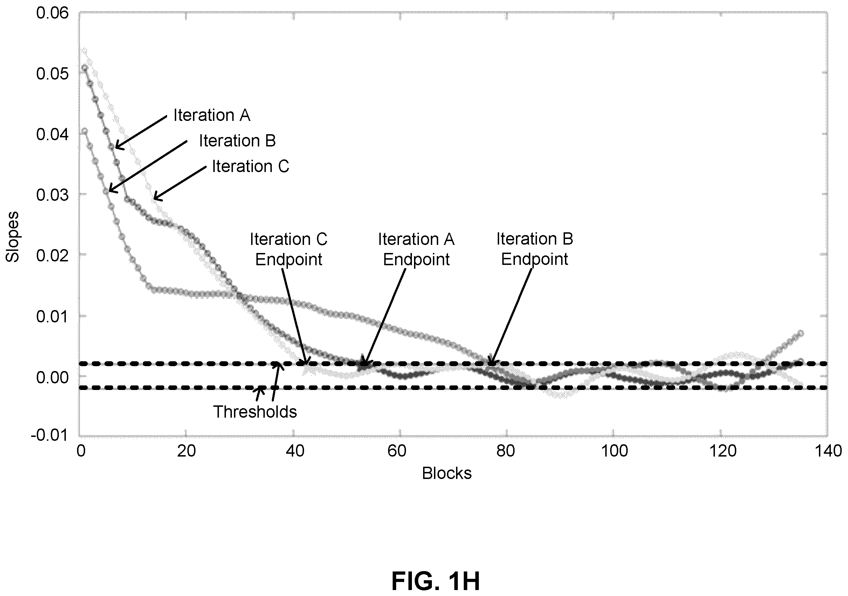

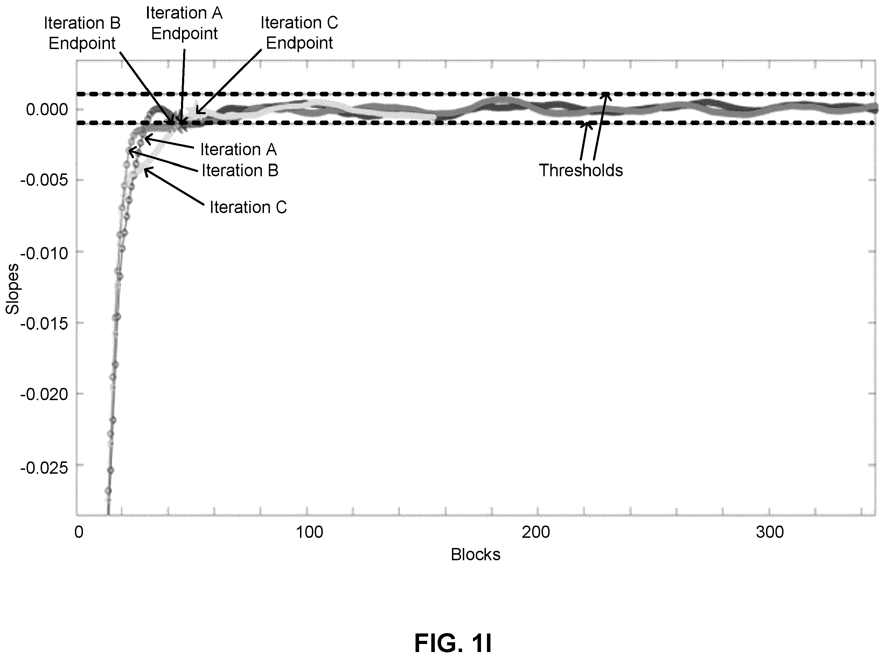

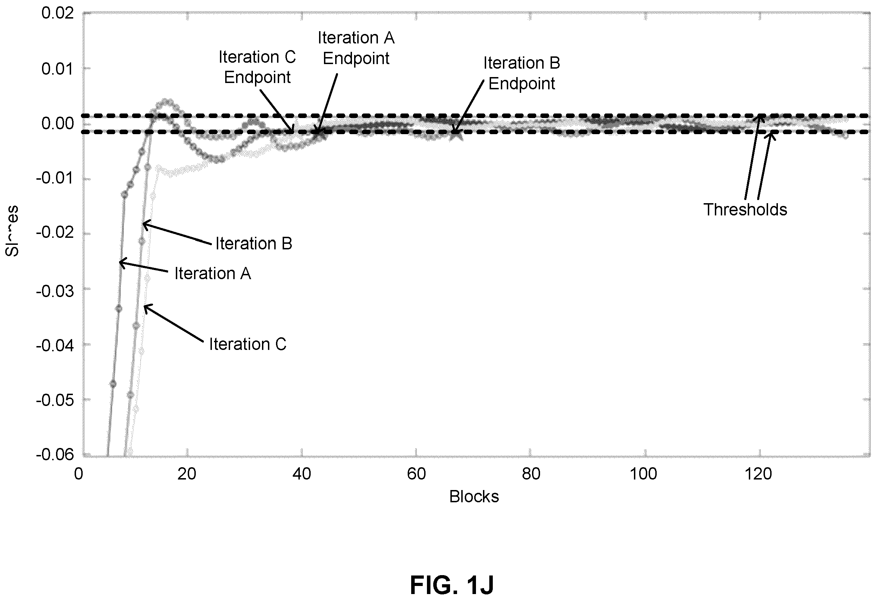

Figs. 1G-1J are diagrams illustrating examples of slope profiles of the process profiles associated with the three of iterations of the example dynamic process as described above with respect to Figs. 1C-1F (after normalization of the process profiles). Figs. 1G and 1H are diagrams of slope profiles of the MBM profiles shown in Figs. 1C and 1D, respectively. Figs. 1I and 1J are diagrams of slope profiles of the MBSD profiles shown in Figs. 1E and 1F, respectively. Notably, spectral data from early stages of the iteration of the dynamic process may in some cases be highly unstable and, therefore, should not be used in association with determining an end point of the iteration of the dynamic process. Therefore, in some implementations, the detection device 220 may identify, based on the spectroscopic data, a starting time point of the spectroscopic data to be used for determining an end point of the iteration of the dynamic process. This time point may be referred to as a pseudo steady state. Thus, in some implementations, a starting time point associated with generating the slope profile is at or after the identified starting time point of the spectroscopic data.

A plateau of a process profile (i.e., when a slope of the process profile is near zero) indicates that the iteration of the dynamic process has reached the steady state. Therefore, a slope of a process profile being near zero is indicative of the end point of the iteration of the dynamic process (i.e., that the iteration of the dynamic process has reached a steady state). Thus, a set of slope thresholds (e.g., an upper slope threshold and a lower slope threshold) needs to be selected, with the set of slope thresholds defining a range of values within which the slope is considered to be sufficiently close enough to zero for the purpose of determining an end point of the iteration of the dynamic process. In some implementations, the detection device 220 may determine the set of slope thresholds based on a trend of the process profile, as described below.

As shown in Fig. 1B at reference 108, the detection device 220 may determine a trend of the process profile. The trend of the process profile is an indication of whether the process profile trends upward or downward. In some implementations, the detection device 220 may determine the trend of the process profile based on a sign of the slope profile. As examples, the MBM profile shown in Fig. 1C, the MBSD profile shown in Fig. 1E, and the MBSD profile shown in Fig. 1F trend downward (e.g., the process profiles have overall negative slopes), while the MBM profile shown in Fig. 1D trends upward (e.g., the process profile has an overall positive slope).

As shown at reference 110, the detection device 220 may identify a set of slope thresholds associated with the iteration of the dynamic process based on the trend. In some implementations, if the trend of the process profile indicates that the process profile trends upward, then detection device 220 may determine the set of slope thresholds based on a minimum value of the slope profile. In some implementations, if the trend of the process profile indicates that the process profile trends downward, then the detection device 220 may determine the set of slope thresholds based on a maximum value of the slope profile.

As shown at reference 112, the detection device 220 may determine, using the set of slope thresholds, an end point of the iteration of the dynamic process based on the slope profile. In some implementations, the detection device 220 may determine the end point based on a set of end point criteria. In one example, the set of end point criteria may require that a particular percentage of a quantity of consecutive values of the slope profile (e.g., 80% of a particular quantity of consecutive values of the slope profile) be within a lower slope threshold and an upper slope threshold.

In some implementations, the detection device 220 may perform end point detection for a single slope profile from a single iteration of the dynamic process. In such an implementation, the detection device 220 may use predefined endpoint criteria in association with determining the end point. In one example, the detection device 220 may determine a point in time at which a particular percentage (e.g., 80%) of a particular quantity of consecutive values (e.g., 30 consecutive values) of the slope profile are greater than or equal to the lower slope threshold and less than or equal to the upper slope threshold.

In some implementations, the detection device 220 may perform end point detection associated with multiple iterations of the dynamic process. For example, the above-described process can be performed for each iteration of the dynamic process separately, and a set of slope thresholds with a particular characteristic (e.g., a widest range) can be identified as a master set of slope thresholds for the dynamic process. The detection device 220 may then use the master set of slope thresholds to determine an end point of each iteration. Thus, in some implementations, the detection device 220 may identify at least two sets of slope thresholds, each associated with a respective iteration of the dynamic process, and may identify a master set of slope thresholds based on the at least two sets of slope thresholds. The master set of slope thresholds can then be used for determination of an end point of an iteration of the dynamic process. For example, the master set of slope thresholds can be used for determining an end point for a previously-performed iteration or for a later-performed iteration (e.g., for end point detection in real-time or near real-time).

In an example associated with Figs. 1C-1J, endpoint criteria may require that at least 24 of 30 consecutive datapoints of the slope profile be within a lower slope threshold and an upper slope threshold for the first stage of blending, and that at least 16 of 20 consecutive datapoints of the slope profile be within a lower slope threshold and an upper slope threshold for the second stage of blending. The determined endpoints based on the techniques described above are shown in Table 1:

**TABLE 1**

| | MBM Profiles | | MBSD Profiles | |
|---|---|---|---|---|
| | First Stage | Second Stage | First Stage | Second Stage |
| Iteration A | 222 | 53 | 45 | 43 |
| Iteration B | 218 | 77 | 43 | 67 |
| Iteration C | Not Detected | 43 | 52 | 39 |

Results shown in Table 1 are consistent with visual observations of the process profiles shown in Figs. 1C-1F. Here, thresholds based on slopes of the process profiles are comparatively more robust than those based on parameter values of the process profiles themselves (e.g., MBM and MBSD), while removing subjectivity from endpoint detection.

As shown at reference 114, the detection device 220 may (optionally) provide an indication of the end point of the iteration of the dynamic process. For example, the detection device 220 may provide, to a user device 230, an indication of the end point of the iteration of the dynamic process as determined by the detection device 220. In some implementations, the detection device 220 may provide information associated with the end point to the user device 230 to, for example, enable visualization of the slope thresholds during the later-performed iteration of the dynamic process).

Additionally, or alternatively, the detection device 220 may provide or store information associated with the set of slope thresholds. For example, the detection device 220 may store an indication of the set of slope thresholds as determined by the detection device 220 (e.g., such that the set of slope thresholds can be used for detection of an end point of another iteration of the dynamic process that is performed at a later time). As another example, the detection device 220 may provide an indication of the set of slope thresholds to a user device 230 (e.g., to enable visualization of the evolution of the dynamic process via the user device 230.

In this way, the detection device 220 may employ a qualitative method (e.g., a moving block analysis) while removing subjectivity from selection of thresholds used for end point detection and, furthermore, enabling end point detection without a need for calibration or historical data. Further, according to the techniques and apparatuses described herein, the detection device 220 enables (1) automatic selection of thresholds used for end point detection, thereby removing subjectivity from analysis, (2) performance of post analysis for a single spectroscopic dataset without a need for calibration or historical data to select thresholds to use for end point detection (e.g., for a previously performed iteration of the dynamic process or for an iteration of the dynamic process performed at a later time), (3) performance of post analysis for multiple iterations to enable automatic selection of thresholds used for end point detection that can be used to monitor future iterations of the dynamic process (e.g., in real time), and/or (4) selection of thresholds used for end point detection based on slopes of process profiles, which are comparatively more robust than thresholds selected based on parameter values of process profiles.

As indicated above, Figs. 1A-1J are provided as examples. Other examples are possible and may differ from what is described with regard to Figs. 1A-1J.

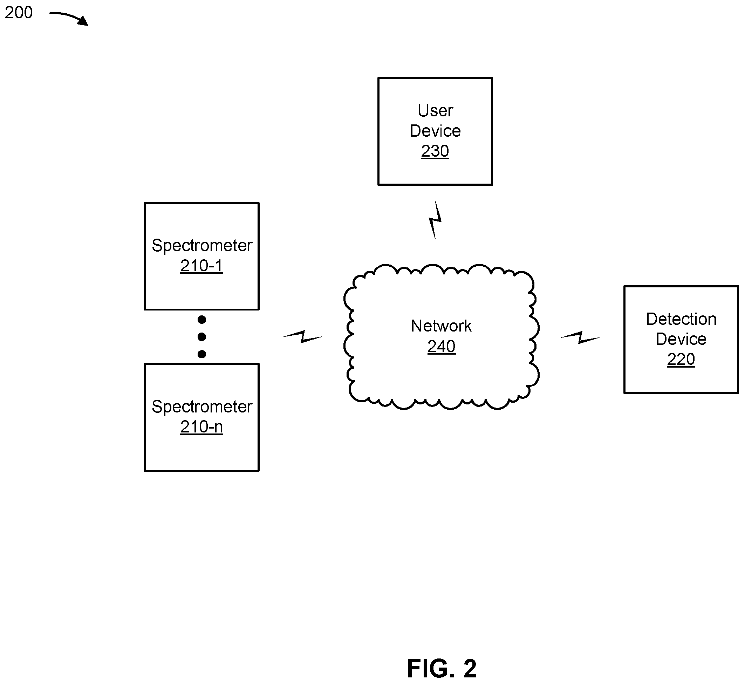

Fig. 2 is a diagram of an example environment 200 in which systems and/or methods described herein may be implemented. As shown in Fig. 2, environment 200 may include one or more spectrometers 210-1 through 210-n (n ≥ 1) (herein collectively referred to as spectrometers 210, and individually as spectrometer 210), a detection device 220, a user device 230, and a network 240. Devices of environment 200 may interconnect via wired connections, wireless connections, or a combination of wired and wireless connections.

Spectrometer 210 includes a device capable of performing a spectroscopic measurement on a sample (e.g., a sample associated with a manufacturing process). For example, spectrometer 210 may include a desktop (i.e., non-handheld) spectrometer device , a handheld spectrometer device, or a portable spectrometer device that performs spectroscopy (e.g., vibrational spectroscopy, such as NIR spectroscopy, mid-infrared spectroscopy (mid-IR), Raman spectroscopy, and/or the like). In some implementations, the spectrometer 210 may be installed or included in a device used in association with performing iterations of a dynamic process. For example, the spectrometer device 210 may in some implementations be installed or otherwise included in a blending device used to perform iterations of a blending process. In some implementations, spectrometer 210 may be capable of providing spectral data, obtained by spectrometer 210, for analysis by another device, such as detection device 220.

Detection device 220 includes one or more devices capable of performing one or more operations associated with determining an end point of an iteration of a dynamic process based on a process profile shape, as described herein. For example, detection device 220 may include a server, a group of servers, a computer, a cloud computing device, and/or the like. In some implementations, detection device 220 may receive information from and/or transmit information to another device in environment 200, such as spectrometer 210 and/or user device 230.

User device 230 includes one or more devices capable of receiving, processing, and/or providing information associated with determining an end point of an iteration of a dynamic process based on a process profile shape, as described herein. For example, user device 230 may include a communication and computing device, such as a desktop computer, a mobile phone (e.g., a smart phone, a radiotelephone, etc.), a laptop computer, a tablet computer, a handheld computer, a wearable communication device (e.g., a smart wristwatch, a pair of smart eyeglasses, etc.), or a similar type of device.

Network 240 includes one or more wired and/or wireless networks. For example, network 240 may include a cellular network (e.g., a 5G network, a 4G network, an long-term evolution (LTE) network, a 3G network, a code division multiple access (CDMA) network, etc.), a public land mobile network (PLMN), a local area network (LAN), a wide area network (WAN), a metropolitan area network (MAN), a telephone network (e.g., the Public Switched Telephone Network (PSTN)), a private network, an ad hoc network, an intranet, the Internet, a fiber optic-based network, a cloud computing network, and/or the like, and/or a combination of these or other types of networks.

The number and arrangement of devices and networks shown in Fig. 2 are provided as an example. In practice, there may be additional devices and/or networks, fewer devices and/or networks, different devices and/or networks, or differently arranged devices and/or networks than those shown in Fig. 2. Furthermore, two or more devices shown in Fig. 2 may be implemented within a single device, or a single device shown in Fig. 2 may be implemented as multiple, distributed devices. Additionally, or alternatively, a set of devices (e.g., one or more devices) of environment 200 may perform one or more functions described as being performed by another set of devices of environment 200.

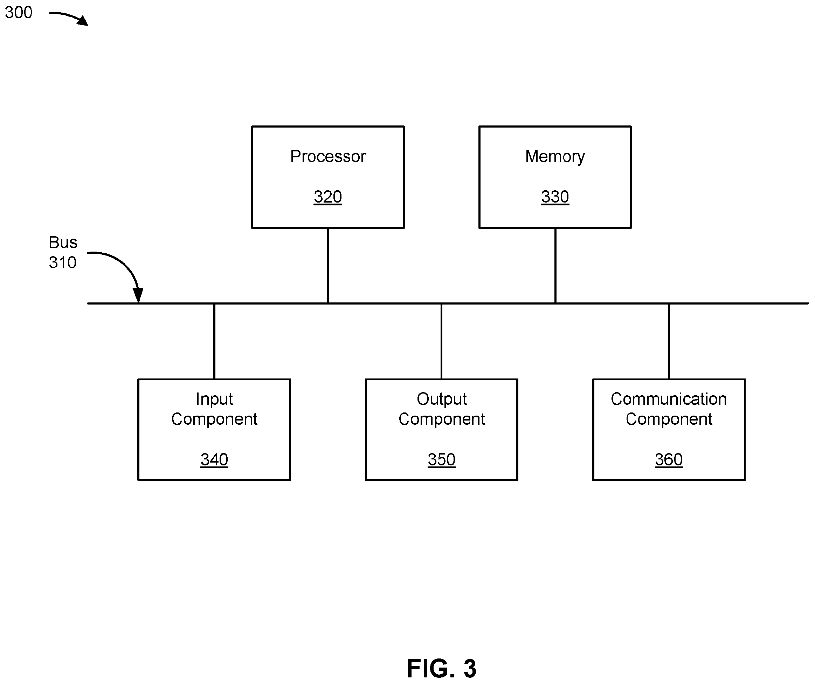

Fig. 3 is a diagram of example components of a device 300, which may correspond to spectrometer 210, detection device 220, and/or user device 230. In some implementations, spectrometer 210, detection device 220, and/or user device 230 may include one or more devices 300 and/or one or more components of device 300. As shown in Fig. 3, device 300 may include a bus 310, a processor 320, a memory 330, an input component 340, an output component 350, and a communication component 360.

Bus 310 includes one or more components that enable wired and/or wireless communication among the components of device 300. Bus 310 may couple together two or more components of Fig. 3, such as via operative coupling, communicative coupling, electronic coupling, and/or electric coupling. Processor 320 includes a central processing unit, a graphics processing unit, a microprocessor, a controller, a microcontroller, a digital signal processor, a field-programmable gate array, an application-specific integrated circuit, and/or another type of processing component. Processor 320 is implemented in hardware, firmware, or a combination of hardware and software. In some implementations, processor 320 includes one or more processors capable of being programmed to perform one or more operations or processes described elsewhere herein.

Memory 330 includes volatile and/or nonvolatile memory. For example, memory 330 may include random access memory (RAM), read only memory (ROM), a hard disk drive, and/or another type of memory (e.g., a flash memory, a magnetic memory, and/or an optical memory). Memory 330 may include internal memory (e.g., RAM, ROM, or a hard disk drive) and/or removable memory (e.g., removable via a universal serial bus connection). Memory 330 may be a non-transitory computer-readable medium. Memory 330 stores information, instructions, and/or software (e.g., one or more software applications) related to the operation of device 300. In some implementations, memory 330 includes one or more memories that are coupled to one or more processors (e.g., processor 320), such as via bus 310.

Input component 340 enables device 300 to receive input, such as user input and/or sensed input. For example, input component 340 may include a touch screen, a keyboard, a keypad, a mouse, a button, a microphone, a switch, a sensor, a global positioning system sensor, an accelerometer, a gyroscope, and/or an actuator. Output component 350 enables device 300 to provide output, such as via a display, a speaker, and/or a light-emitting diode. Communication component 360 enables device 300 to communicate with other devices via a wired connection and/or a wireless connection. For example, communication component 360 may include a receiver, a transmitter, a transceiver, a modem, a network interface card, and/or an antenna.

Device 300 may perform one or more operations or processes described herein. For example, a non-transitory computer-readable medium (e.g., memory 330) may store a set of instructions (e.g., one or more instructions or code) for execution by processor 320. Processor 320 may execute the set of instructions to perform one or more operations or processes described herein. In some implementations, execution of the set of instructions, by one or more processors 320, causes the one or more processors 320 and/or the device 300 to perform one or more operations or processes described herein. In some implementations, hardwired circuitry is used instead of or in combination with the instructions to perform one or more operations or processes described herein. Additionally, or alternatively, processor 320 may be configured to perform one or more operations or processes described herein. Thus, implementations described herein are not limited to any specific combination of hardware circuitry and software.

The number and arrangement of components shown in Fig. 3 are provided as an example. Device 300 may include additional components, fewer components, different components, or differently arranged components than those shown in Fig. 3. Additionally, or alternatively, a set of components (e.g., one or more components) of device 300 may perform one or more functions described as being performed by another set of components of device 300.

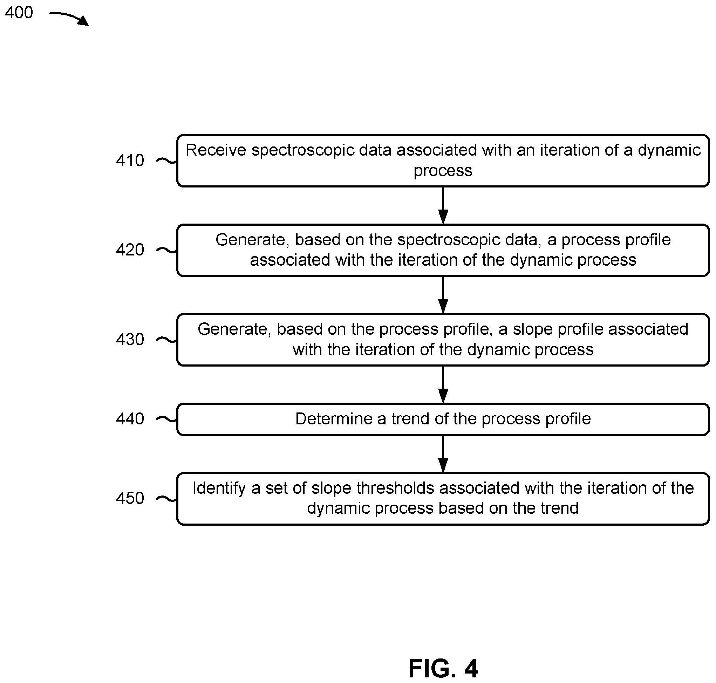

Fig. 4 is a flowchart of an example process 400 associated with determining an end point of an iteration of a dynamic process based on a process profile shape. In some implementations, one or more process blocks of Fig. 4 are performed by a device (e.g., detection device 220). In some implementations, one or more process blocks of Fig. 4 are performed by another device or a group of devices separate from or including the device, such as a spectrometer (e.g., spectrometer 210) and/or a user device (e.g., user device 230). Additionally, or alternatively, one or more process blocks of Fig. 4 may be performed by one or more components of device 300, such as processor 320, memory 330, input component 340, output component 350, and/or communication component 360.

As shown in Fig. 4, process 400 may include receiving spectroscopic data associated with an iteration of a dynamic process (block 410). For example, the device may receive spectroscopic data associated with an iteration of a dynamic process, as described above.

As further shown in Fig. 4, process 400 may include generating, based on the spectroscopic data, a process profile associated with the iteration of the dynamic process (block 420). For example, the device may generate, based on the spectroscopic data, a process profile associated with the iteration of the dynamic process, as described above.

As further shown in Fig. 4, process 400 may include generating, based on the process profile, a slope profile associated with the iteration of the dynamic process (block 430). For example, the device may generate, based on the process profile, a slope profile associated with the iteration of the dynamic process, as described above.

As further shown in Fig. 4, process 400 may include determining a trend of the process profile (block 440). For example, the device may determine a trend of the process profile, as described above.

As further shown in Fig. 4, process 400 may include identifying a set of slope thresholds associated with the iteration of the dynamic process based on the trend (block 450). For example, the device may identify a set of slope thresholds associated with the iteration of the dynamic process based on the trend, as described above.

Process 400 may include additional implementations, such as any single implementation or any combination of implementations described below and/or in connection with one or more other processes described elsewhere herein.

In a first implementation, process 400 includes determining, using the set of slope thresholds, an end point of the iteration of the dynamic process based on the slope profile.

In a second implementation, alone or in combination with the first implementation, the end point is determined further based on a set of end point criteria.

In a third implementation, alone or in combination with one or more of the first and second implementations, the set of slope thresholds comprises a lower slope threshold and an upper slope threshold, and the set of end point criteria require a particular percentage of a quantity of consecutive values of the slope profile to be within the lower slope threshold and the upper slope threshold.

In a fourth implementation, alone or in combination with one or more of the first through third implementations, the trend indicates that the process profile trends upward, and determining the set of slope thresholds comprises determining the set of slope thresholds based on a minimum value of the slope profile.

In a fifth implementation, alone or in combination with one or more of the first through fourth implementations, the trend indicates that the process profile trends downward, and determining the set of slope thresholds comprises determining the set of slope thresholds based on a maximum value of the slope profile.

In a sixth implementation, alone or in combination with one or more of the first through fifth implementations, process 400 includes performing normalization of the process profile prior to generating the slope profile.

In a seventh implementation, alone or in combination with one or more of the first through sixth implementations, process 400 includes identifying, based on the spectroscopic data, a starting time point of the spectroscopic data to be used for determining an end point of the iteration of the dynamic process, wherein a starting time point associated with generating the slope profile is at or after the identified starting time point of the spectroscopic data.

In an eighth implementation, alone or in combination with one or more of the first through seventh implementations, the iteration of the dynamic process is a first iteration of the dynamic process, the set of slope thresholds is a first set of slope thresholds, and process 400 includes identifying a second set of slope thresholds associated with a second iteration of the dynamic process, and identifying a master set of slope thresholds based on the first set of slope thresholds and the second set of slope thresholds.

In a ninth implementation, alone or in combination with one or more of the first through eighth implementations, process 400 includes determining, using the master set of slope thresholds, an end point of at least one of the first iteration of the dynamic process or the second iteration of the dynamic process.

Although Fig. 4 shows example blocks of process 400, in some implementations, process 400 includes additional blocks, fewer blocks, different blocks, or differently arranged blocks than those depicted in Fig. 4. Additionally, or alternatively, two or more of the blocks of process 400 may be performed in parallel.

The foregoing disclosure provides illustration and description, but is not intended to be exhaustive or to limit the implementations to the precise forms disclosed. Modifications and variations may be made in light of the above disclosure or may be acquired from practice of the implementations.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

As used herein, satisfying a threshold may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiple of the same item.

When "a processor" or "one or more processors" (or another device or component, such as "a controller" or "one or more controllers") is described or claimed (within a single claim or across multiple claims) as performing multiple operations or being configured to perform multiple operations, this language is intended to broadly cover a variety of processor architectures and environments. For example, unless explicitly claimed otherwise (e.g., via the use of "first processor" and "second processor" or other language that differentiates processors in the claims), this language is intended to cover a single processor performing or being configured to perform all of the operations, a group of processors collectively performing or being configured to perform all of the operations, a first processor performing or being configured to perform a first operation and a second processor performing or being configured to perform a second operation, or any combination of processors performing or being configured to perform the operations. For example, when a claim has the form "one or more processors configured to: perform X; perform Y; and perform Z," that claim should be interpreted to mean "one or more processors configured to perform X; one or more (possibly different) processors configured to perform Y; and one or more (also possibly different) processors configured to perform Z."

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1. A method, comprising:
receiving, by a device, spectroscopic data associated with an iteration of a dynamic process;
generating, by the device and based on the spectroscopic data, a process profile associated with the iteration of the dynamic process;
generating, by the device and based on the process profile, a slope profile associated with the iteration of the dynamic process;
determining, by the device, a trend of the process profile; and
identifying, by the device, a set of slope thresholds associated with the iteration of the dynamic process based on the trend.

2. The method of claim 1, further comprising determining, using the set of slope thresholds, an end point of the iteration of the dynamic process based on the slope profile.

3. The method of claim 2, wherein the end point is determined further based on a set of end point criteria, optionally wherein the set of slope thresholds comprises a lower slope threshold and an upper slope threshold, and the set of end point criteria require a particular percentage of a quantity of consecutive values of the slope profile to be within the lower slope threshold and the upper slope threshold.

4. The method of any of claims 1 to 3, wherein the trend indicates that the process profile trends upward, and determining the set of slope thresholds comprises:
determining the set of slope thresholds based on a minimum value of the slope profile.

5. The method of any of claim 1 to 3, wherein the trend indicates that the process profile trends downward, and determining the set of slope thresholds comprises:
determining the set of slope thresholds based on a maximum value of the slope profile.

6. The method of any of claims 1 to 5, further comprising performing normalization of the process profile prior to generating the slope profile.

7. The method of any of claims 1 to 6, further comprising identifying, based on the spectroscopic data, a starting time point of the spectroscopic data to be used for determining an end point of the iteration of the dynamic process, wherein a starting time point associated with generating the slope profile is at or after the identified starting time point of the spectroscopic data.

8. The method of any of claims 1 to 7, wherein the iteration of the dynamic process is a first iteration of the dynamic process, the set of slope thresholds is a first set of slope thresholds, and the method further comprises:
identifying a second set of slope thresholds associated with a second iteration of the dynamic process; and
identifying a master set of slope thresholds based on the first set of slope thresholds and the second set of slope thresholds;
optionally wherein the method further comprises determining, using the master set of slope thresholds, an end point of at least one of the first iteration of the dynamic process or the second iteration of the dynamic process.

9. A device, comprising:
one or more memories; and
one or more processors, coupled to the one or more memories, configured to:
obtain time-series spectroscopic data associated with an iteration of a dynamic process;
generate, based on the time-series spectroscopic data, a process profile associated with the iteration of the dynamic process;
generate, based on the process profile, a slope profile associated with the iteration of the dynamic process; and
compute a set of slope thresholds associated with the iteration of the dynamic process based on the slope profile and a trend characteristic of the process profile.

10. The device of claim 9, wherein the one or more processors are further configured to determine, using the set of slope thresholds, an end point of the iteration of the dynamic process based on the slope profile, optionally wherein the end point is determined further based on a set of end point criteria.

11. The device of claim 9 or claim 10, wherein the trend characteristic indicates that the process profile trends upward, and determining the set of slope thresholds comprises:
determine the set of slope thresholds based on a minimum value of the slope profile; or. wherein the trend characteristic indicates that the process profile trends downward, and the one or more processors, to determine the set of slope thresholds, are configured to:
determine the set of slope thresholds based on a maximum value of the slope profile.

12. The device of any of claims 9 to 11, wherein the one or more processors are further configured to perform normalization of the process profile prior to generating the slope profile.

13. The device of any of claims 9 to 12, wherein the one or more processors are further configured to identify, based on the time-series spectroscopic data, a starting time point of the spectroscopic data to be used for determining an end point of the iteration of the dynamic process, wherein a starting time point associated with generating the slope profile is at or after the identified starting time point of the spectroscopic data.

14. The device of any of claims 9 to 13, wherein the iteration of the dynamic process is a first iteration of the dynamic process, the set of slope thresholds is a first set of slope thresholds, and the one or more processors are further configured to:
identify a second set of slope thresholds associated with a second iteration of the dynamic process; and
identify a master set of slope thresholds for the dynamic process based on the first set of slope thresholds and the second set of slope thresholds;
optionally wherein the one or more processors are further configured to determine, using the master set of slope thresholds, an end point of a third iteration of the dynamic process.

15. A non-transitory computer-readable medium storing a set of instructions, the set of instructions comprising:
one or more instructions that, when executed by one or more processors of a device, cause the device to:
obtain a process profile associated with an iteration of a dynamic process based on spectroscopic data associated with the iteration of the dynamic process;
generate a slope profile associated with the iteration of the dynamic process based on the process profile;
identify a set of slope thresholds associated with the iteration of the dynamic process based on the slope profile and a trend associated with the process profile; and
determine an end point of another iteration of the dynamic process based on the set of slope thresholds.
